# EUROPÄISCHE PATENTANMELDUNG

(11) **EP 1 544 073 A1**
(43) Veröffentlichungstag der Anmeldung: **22.06.2005**
(21) Anmeldenummer: 04106585.5
(22) Anmeldetag: 15.12.2004
(51) Int. Cl.: B60T 13/66

(54) **Verfahren zum Herstellen einer Anlage**

(30) Priorität: 18.12.2003 DE 10359662
(71) Anmelder: Siemens Aktiengesellschaft, 80333 München (DE)
(72) Erfinder: Anton, Eduard, 82049, Pullach (DE); Heckemanns, Klaus, 47800 Krefeld (DE); Schweisfurth, Jörg Nikolaus, 82205 Gilching (DE)

(57) **Zusammenfassung**

Die Erfindung betrifft ein Verfahren zum Herstellen einer Anlage, insbesondere eines Fahrzeuges oder einer Komponente eines Fahrzeuges. Beispielsweise ist die Anlage eine Bremse eines Schienenfahrzeugs. Es ist vorgesehen, dass die Vorgaben des Kunden systematisch erfasst werden. Vorhandene Mittel werden systematisch weiter entwickelt und/oder mit geringem Aufwand an neue Vorgaben des Kunden angepasst. Die erfassten Vorgaben werden systematisch mit den Mitteln verglichen. Die erfassten Vorgaben werden dann bestätigt, wenn sie mit vorhandenen und/oder angepassten Mitteln umsetzbar sind. Gemäß der erfassten und bestätigten Vorgaben wird die Anlage dann konzipiert und hergestellt. Die erfassten Vorgaben betreffen beispielsweise einen Kompressor, einen Regler, einen Bremshebel, einen Gleitschutz, ein Bremsgestänge oder eine Bremssteuerung, die Teil einer Bremse eines Schienenfahrzeugs sind.

## Beschreibung

Die Erfindung betrifft ein Verfahren zum Herstellen einer Anlage, insbesondere eines Fahrzeugs oder einer Komponente eines Fahrzeugs.

Bisher ist es üblich, eine Anlage vollständig zu konzipieren und als fertige Anlage dem Kunden anzubieten. Dabei kann es vorkommen, dass Wünsche des Kunden hinsichtlich des Aufbaus der Anlage nicht oder nur unvollständig erfüllt werden können. Das trifft besonders auf Anlagen zu, die Bestandteil eines Schienenfahrzeuges sind. Eine solche Anlage ist z.B. eine Bremsanlage.

Der Erfindung liegt die Aufgabe zugrunde, ein Verfahren zum Herstellen einer Anlage anzugeben, das einfacher und schneller als bisher möglich auf einen Kundenwunsch abstellbar ist.

Die Aufgabe wird gemäß der Erfindung dadurch gelöst, dass Vorgaben des Kunden systematisch erfasst werden, dass vorhandene Mittel systematisch weiter entwickelt und/oder mit geringem Aufwand an neue Vorgaben des Kunden angepasst werden, dass die erfassten Vorgaben systematisch mit den Mitteln verglichen werden, dass die erfassten Vorgaben bestätigt werden, wenn sie mit vorhandenen und/oder angepassten Mitteln umsetzbar sind, und dass gemäß der erfassten und bestätigten Vorgaben die Anlage konzipiert und hergestellt wird.

Damit wird der Vorteil erzielt, dass aufgrund des systematischen Analysierens und Konzipierens durch den Hersteller jeder Kunde ein Unikat bekommt. Die vorhandenen Mittel, bzw. die angepassten Mittel werden vorteilhaft so eingesetzt, dass sie die Vorgaben des Kunden vollständig oder zumindest weitgehend erfüllen. Folglich steht beim Konzipieren der Anlage der Kundenwunsch im Vordergrund. Ein Kunde erhält nicht aus einer Anzahl fertig konzipierter Anlagen diejenige, die am besten geeignet ist, sondern er erhält eine Anlage, die ausgehend von seinen Wünschen, nur für ihn konzipiert wurde.

Es wird der Vorteil erzielt, dass auf veränderte Wünsche von Kunden sehr schnell und systematisch reagiert werden kann.
Eine bisher bekannte Überarbeitung eines fertigen Gesamtkonzeptes wäre nämlich nur wirtschaftlich, wenn mehrere Kunden gleiche Änderungswünsche vorbringen würden.

Die Anlage ist beispielsweise ein Schienenfahrzeug oder eine Komponente eines Schienenfahzeugs. Gerade beim Bau von Schienenfahrzeugen konnten nämlich bisher die Wünsche der Kunden nicht immer erfüllt werden. Es wird also der Vorteil erzielt, dass ein Schienenfahrzeug hergestellt wird, das besser als bisher an die Wünsche der Kunden angepasst werden kann.

Beispielsweise ist die Anlage eine Bremse und/oder ein Bremssystem eines Schienenfahrzeugs. Es wird also ausgehend von einer sogenannten Bremsenplattform, die ein vorhandenes Mittel ist, eine Bremse konzipiert, die bei Berücksichtigung der vorhandenen und/oder angepassten Mittel weitgehend alle oder sogar alle Wünsche des Kunden erfüllt. Das ist möglich, weil individuell aber systematisch für jeden Kunden ein Bremsenunikat konzipiert und hergestellt wird, das die am besten geeigneten vorhandenen und/oder angepassten Mittel bzw. Anlagenteile umfasst und miteinander kombiniert.

Der Kunde braucht nicht eine fertig konzipierte Bremse abzunehmen, sondern kann eine nach seinen Wünschen speziell konzipierte Bremse erhalten. Das Herstellungsverfahren bzw. das vorangehende Konzipierungsverfahren ist besonders einfach und schnell auf den Kundenwunsch abstellbar.

Die Bremse und/oder das Bremssystem werden beispielsweise elektrohydraulisch und/oder elektromechanisch und/oder elektropneumatisch betrieben. Das Herstellungsverfahren ist also für jeden dieser Bremsentypen in gleicher Weise geeignet.

Eine der erfassten Vorgaben des Kunden betrifft beispielsweise einen Kompressor, einen Regler, einen Bremshebel, einen Gleitschutz, ein Bremsgestänge oder eine Bremssteuerung der Bremse. Es kann also vorteilhaft einfach und schnell eine Bremse für ein Schienenfahrzeug konzipiert werden, die sich von einer anderen Bremse nur durch die Art einer der genannten Komponenten, z.B. des Reglers, unterscheidet.

Mit dem Verfahren nach der Erfindung wird insbesondere der Vorteil erzielt, dass jeder Kunde weitgehend die nach seinen Wünschen und Vorgaben konzipierte und hergestellte Anlage erhält. Das gilt insbesondere für Bestandteile eines Schienenfahrzeuges, wie z.B. eine Bremse.

## Patentansprüche

1. Verfahren zum Herstellen einer Anlage, insbesondere eines Fahrzeugs oder einer Komponente eines Fahrzeugs,
**dadurch gekennzeichnet, dass** Vorgaben des Kunden systematisch erfasst werden, dass vorhandene Mittel systematisch weiter entwickelt und/oder mit geringem Aufwand an neue Vorgaben des Kunden angepasst werden, dass die erfassten Vorgaben systematisch mit den Mitteln verglichen werden, dass die erfassten Vorgaben bestätigt werden, wenn sie mit vorhandenen und/oder angepassten Mitteln umsetzbar sind, und dass gemäß der erfassten und bestätigten Vorgaben die Anlage konzipiert und hergestellt wird.

2. Verfahren nach Anspruch 1,
**dadurch gekennzeichnet, dass** die Anlage ein Schienenfahrzeug oder eine Komponente eines Schienenfahrzeugs ist.

3. Verfahren nach Anspruch 2,
**dadurch gekennzeichnet, dass** die Anlage eine Bremse und/oder ein Bremssystem eines Schienenfahrzeugs ist.

4. Verfahren nach Anspruch 3,
**dadurch gekennzeichnet, dass** die Bremse und/oder das Bremssystem elektrohydraulisch und/oder elektromechanisch und/oder elektropneumatisch betrieben wird.

5. Verfahren nach einem der Ansprüche 3 oder 4,
**dadurch gekennzeichnet, dass** eine der erfassten Vorgaben einen Kompressor, einen Regler, einen Bremshebel, einen Gleitschutz, ein Bremsgestänge oder eine Bremssteuerung der Bremse betrifft.
